# EUROPEAN PATENT APPLICATION

(11) **EP 4 661 199 A1**
(43) Date of publication of application: **10.12.2025**
(21) Application number: 24854440.5
(22) Date of filing: 12.08.2024
(51) Int. Cl.: H01M 50/574, H01M 10/04

(54) **BATTERY CELL, BATTERY PACK, AND VEHICLE COMPRISING SAME**

(30) Priority: 11.08.2023 KR 20230105898; 30.07.2024 KR 20240100883
(71) Applicant: LG Energy Solution, Ltd., Seoul 07335 (KR)
(72) Inventor: LIM, Seong-Min, Daejeon 34122 (KR); LEE, Byoung-Gu, Daejeon 34122 (KR); KIM, Do-Yun, Daejeon 34122 (KR); LEE, So-Yeon, Daejeon 34122 (KR)
(74) Representative: Goddar, Heinz J.
(86) International application number: PCT/KR2024/011998
(87) International publication number: WO 2025/037889

(57) **Abstract**

A battery cell according to an embodiment of the present disclosure may include: an electrode assembly; a battery housing having an opening on one side thereof and configured to accommodate the electrode assembly through the opening; a battery terminal configured to be electrically connected to the electrode assembly through a closed portion provided opposite the opening of the battery housing; and a current collector comprising a first coupling portion configured to be electrically coupled to the electrode assembly, a second coupling portion configured to be electrically coupled to the battery terminal, and a bridge portion configured to electrically connect the first coupling portion and the second coupling portion, wherein a cross-sectional area of the bridge portion may be configured to be 5% or less of an entire cross-sectional area of the current collector.

## Description

### TECHNICAL FIELD

The present disclosure relates to a battery cell, a battery pack, and a vehicle including the same.

This application is based on and claims priority from Korean Patent Application No. 10-2023-0105898, filed on August 11, 2023, with the Korean Intellectual Property Office, the disclosure of which is incorporated herein in its entirety by reference.

This application is based on and claims priority from Korean Patent Application No. 10-2024-0100883, filed on July 30, 2024, with the Korean Intellectual Property Office, the disclosure of which is incorporated herein in its entirety by reference.

### BACKGROUND ART

Secondary batteries, which are easy to apply depending on the product group and have electrical features such as high energy density and the like, are generally used in electric vehicles (EVs) or hybrid electric vehicles (HEVs) that are driven by an electrical drive source, as well as in portable devices. These secondary batteries are attracting attention as a new energy source for improving eco-friendliness and energy efficiency because of the primary advantage of dramatically reducing the use of fossil fuels and another advantage of not generating by-products resulting from energy use.

Current secondary batteries widely used include lithium-ion batteries, lithium-polymer batteries, nickel-cadmium batteries, nickel-hydrogen batteries, nickel-zinc batteries, and the like. The operating voltage of this unit secondary battery cell, that is, the unit battery cell, is approximately 2.5V to 4.5V. Therefore, when an output voltage higher than this is required, a battery pack may be configured by connecting a plurality of battery cells in series. In addition, a battery pack may be configured by connecting multiple battery cells in parallel depending on the charge/discharge capacity required for the battery pack. Accordingly, the number of battery cells included in the battery pack may be set in various ways depending on the required output voltage and/or charge/discharge capacity.

Meanwhile, the fuse devices currently used in battery cells include PTC (positive temperature coefficient) thermistors, TCOs (thermal cut-outs), and the like. However, as PTC thermistors or TCOs are repeatedly operated, their own resistance increases, thereby increasing the overall resistance of the circuit.

In addition, the above devices are all operated by heat generated due to overcurrent. That is, the above devices operate to block the flow of current only when overcurrent flows through the circuit current path due to overcharge or the like so that the temperature rises according thereto.

Therefore, the above devices may operate to block overcurrent after when a situation that threatens safety due to heat generation is imminent, but are unable to block overcurrent immediately when a cause that may increase the temperature occurs. As described above, in the case where the internal pressure increases due to abnormal temperature rises inside the battery cell, if overcurrent fails to be blocked within an appropriate time, safety issues such as ignition or explosion may occur.

In addition, since the above devices simply operate depending on temperature, they are difficult to use in battery cells that exhibit high output, such as battery packs used in vehicles. That is, the battery packs for vehicles require a high c-rate and result in a large amount of heat generated according thereto. However, the devices such as PTC (positive temperature coefficient) thermistors, TCOs (thermal cut-outs), and thermal fuses are likely to operate too early when exposed to such high-temperature environments.

Therefore, it is necessary to provide a battery cell having a structure that may be used in environments where high current flows and may cut off the current in advance when an event that may cause a temperature increase (e.g., an increase in the internal pressure of the battery cell) occurs before the temperature rises to a level that may cause a safety issue.

### DISCLOSURE

### Technical Problem

The present disclosure is designed to solve the problems of the related art, and therefore the present disclosure is intended to quickly cut off electrical connection when an overcurrent exceeding a reference value occurs in a battery cell.

However, the technical problems that the present disclosure seeks to solve are not limited to the above-mentioned problems, and other problems not mentioned above will be clearly understood by those skilled in the art from the description of the invention described below.

### Technical Solution

In one aspect of the present disclosure, there is provided a battery cell including: an electrode assembly; a battery housing having an opening on one side thereof and configured to accommodate the electrode assembly through the opening; a battery terminal configured to be electrically connected to the electrode assembly through a closed portion provided opposite the opening of the battery housing; and a current collector comprising a first coupling portion configured to be electrically coupled to the electrode assembly, a second coupling portion configured to be electrically coupled to the battery terminal, and a bridge portion configured to electrically connect the first coupling portion and the second coupling portion, and a cross-sectional area of the bridge portion may be configured to be 5% or less of an entire cross-sectional area of the current collector.

The cross-sectional area of the bridge portion may be configured to be 3% to 5% of the entire cross-sectional area of the current collector.

The cross-sectional area of the bridge portion may be configured to be 2% to 4% of the entire cross-sectional area of the current collector.

A plurality of bridge portions may be provided, and a total cross-sectional area of the plurality of bridge portions may be configured to be 5% or less of the entire cross-sectional area of the current collector.

A fusing time of the current collector may be within about 20 seconds when an abnormality occurs in the battery cell.

The current collector may include a fusing portion provided in the bridge portion and configured to break when an abnormality occurs in the battery cell.

The current collector may have a rim portion located on the outer circumference of the first coupling portion and the second coupling portion, and the bridge portion may be configured to connect the rim portion and the second coupling portion.

The first coupling portion and the second coupling portion may be positioned to be spaced apart from each other in a radial direction of the electrode assembly.

The current collector may have a slit line configured to space the first coupling portion and the second coupling portion apart from each other.

A battery pack according to the present disclosure may include a battery cell according to the present disclosure.

A vehicle according to the present disclosure may include a battery cell according to the present disclosure.

### Advantageous Effects

According to one aspect of the present disclosure, when an overcurrent exceeding a reference value occurs in a battery cell, the electrical connection may be quickly cut off, thereby ensuring the safety of use of the battery cell.

In addition, the present disclosure may have various other effects, and these will be described in the respective embodiments, or description of effects that may be easily inferred by those skilled in the art will be omitted.

### DESCRIPTION OF DRAWINGS

The accompanying drawings illustrate a preferred embodiment of the present disclosure and, together with the detailed description of the invention, serve to provide further understanding of the technical idea of the present disclosure, and thus, the present disclosure is not construed as being limited to the drawings.
FIG. 1 is a drawing illustrating the structure of an upper portion of a battery cell according to an embodiment of the present disclosure.
FIG. 2 is a perspective view of a current collector (first current collector) included in a battery cell according to an embodiment of the present disclosure.
FIG. 3 is a cross-sectional view taken along line II-II' in FIG. 2, which illustrates the state in which a bridge portion is fused when an overcurrent occurs in a current collector (first current collector) included in a battery cell according to an embodiment of the present disclosure.
FIG. 4 is a drawing illustrating that two bridge portions are provided in a current collector (first current collector) included in a battery cell according to another embodiment of the present disclosure.
FIG. 5 is a drawing illustrating that three bridge portions are provided in a current collector (first current collector) included in a battery cell according to another embodiment of the present disclosure.
FIG. 6 is a drawing illustrating that four bridge portions are provided in a current collector (first current collector) included in a battery cell according to another embodiment of the present disclosure.
FIG. 7 is a drawing illustrating whether or not bridge portions fuse depending on the number and widths of bridge portions in the current collector (first current collector) in FIGS. 4 to 6.
FIG. 8 is a drawing illustrating a current collector (first current collector) included in a battery cell according to another embodiment of the present disclosure.
FIG. 9 is a CT image illustrating a bridge portion being fused when an overcurrent occurs in a current collector (first current collector) included in a battery cell according to another embodiment of the present disclosure.
FIG. 10 is a drawing illustrating whether or not a current collector (first current collector) fuses depending on widths of the bridge portions in the current collector (first current collector) in FIG. 8.
FIG. 11 is experimental data illustrating the results of an external short circuit if the width of a bridge portion in the current collector (first current collector) in FIG. 8 is 2.5 mm.
FIG. 12 is a drawing illustrating whether or not a current collector (first current collector) included in a battery cell fuses depending on a crystal structure of a first electrode of the current collector (first current collector) according to an embodiment of the present disclosure.
FIG. 13 is experimental data illustrating a result of an external short circuit when a crystal structure of a first electrode in a current collector (first current collector) is SC:PC = 5:5 according to an embodiment of the present disclosure.
FIG. 14 is a drawing illustrating the structure of a lower portion of a battery cell according to an embodiment of the present disclosure.
FIG. 15 is a drawing illustrating a battery pack including a battery cell according to an embodiment of the present disclosure.
FIG. 16 is a drawing illustrating a vehicle according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the configurations proposed in the embodiments and drawings of this specification indicate only the most preferable embodiment of the present disclosure and do not represent all technical ideas of the present disclosure, so it should be understood that various equivalents and modifications could be made thereto at the time of filing the application.

In addition, the present disclosure includes various embodiments. Redundant descriptions of substantially the same or similar configurations between the embodiments will be omitted, and the description will be made based on differences thereof.

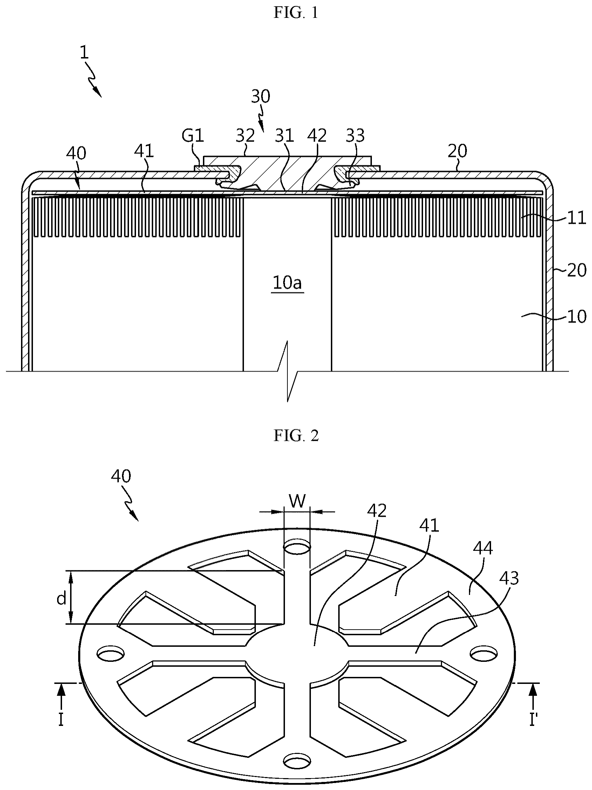

First, a battery cell 1 according to an embodiment of the present disclosure will be described with reference to FIGS. 1 to 3.

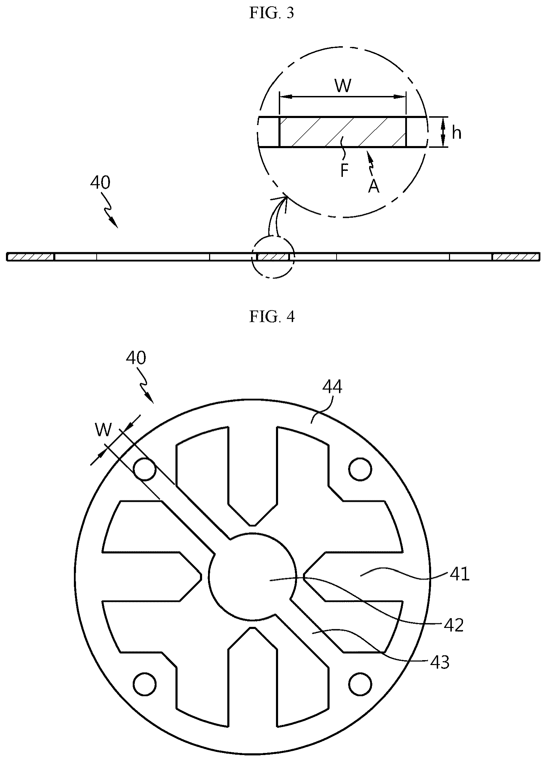

FIG. 1 is a drawing illustrating the structure of an upper portion of a battery cell according to an embodiment of the present disclosure, and FIG. 2 is a perspective view of a current collector (first current collector) included in a battery cell according to an embodiment of the present disclosure. In addition, FIG. 3 is a cross-sectional view taken along line II-II' in FIG. 2, which illustrates the state in which a bridge portion is fused when an overcurrent occurs in a current collector (first current collector) included in a battery cell according to an embodiment of the present disclosure.

Referring to FIGS. 1 to 3, the battery cell 1 according to an embodiment of the present disclosure may include an electrode assembly 10, a battery housing 20, a battery terminal 30, and a current collector (first current collector) 40. The battery cell 1 may be a secondary battery configured to be capable of charging and discharging. The above battery cell 1 may be, for example, a cylindrical battery.

The electrode assembly 10 may include a first electrode having a first polarity, a second electrode having a second polarity opposite the first polarity, and a separator interposed between the first electrode and the second electrode. The above electrode assembly 10 may be configured in a form obtained by winding a laminate including the first electrode, the second electrode, and the separator in one direction. If the electrode assembly 10 is configured in the wound form as described above, a winding center hole 10a may be formed in a winding center.

The first electrode may include a first uncoated portion 11 that is an area where an electrode active material is not applied. The first uncoated portion 11 may extend from one end of the first electrode in the winding direction of the electrode assembly 10. Therefore, the first uncoated portion 11 may be provided on a first surface that is approximately perpendicular to the outer surface of the electrode assembly 10.

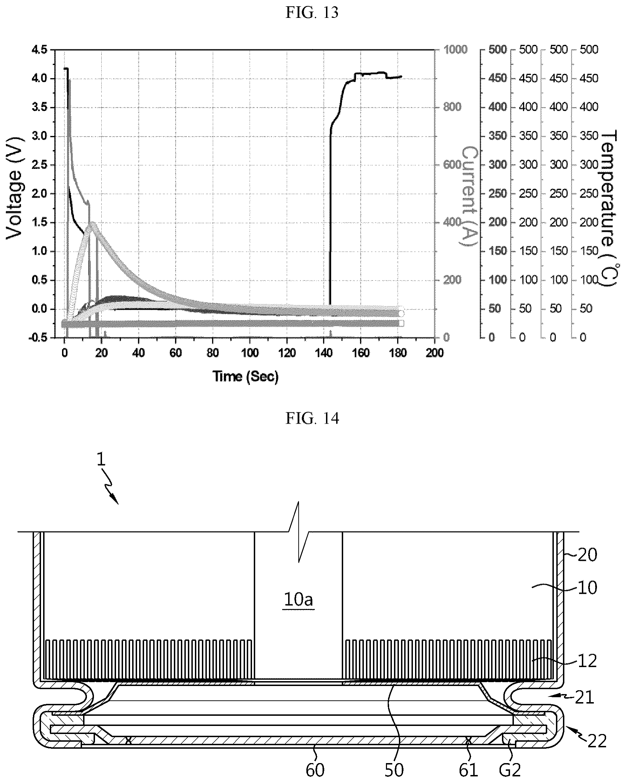

The second electrode may include a second uncoated portion 12 that is an area where the electrode active material is not applied (see FIG. 14). The second uncoated portion 12 may extend from one end of the second electrode in the winding direction of the electrode assembly 10. Therefore, the second uncoated portion 12 may be provided on a second surface (a surface located on the opposite side of the first surface) that is approximately perpendicular to the outer surface of the electrode assembly 10.

Although not specifically shown in the drawing, the first uncoated portion 11 and/or the second uncoated portion 12 may include a plurality of segments formed to be divided along the winding direction of the electrode assembly 10. These segments may be formed by notching the first uncoated portion 11 and/or the second uncoated portion 12 to a predetermined depth. The plurality of segments may be bent approximately in the radial direction of the electrode assembly 10. In this case, some of the segments adjacent to each other in the radial direction may overlap each other.

The battery housing 20 may be configured to accommodate the electrode assembly 10 through an opening formed on one side thereof. The battery housing 20 may have a closed portion formed opposite the opening. The battery housing 20 may include a conductive metal. The battery housing 20 may be electrically connected to the second electrode of the electrode assembly 10.

The battery terminal 30 may be configured to be electrically connected to the electrode assembly 10 through the closed portion provided opposite the opening of the battery housing 20. The battery terminal 30 may be electrically connected to, for example, the first electrode of the electrode assembly 10. In this case, the battery terminal 30 may function as a first terminal of the battery cell 1. The battery terminal 30 and the battery housing 20 may have opposite polarities to each other, and in this case, a first sealing member G1 may be provided between the battery housing 20 and the battery terminal 30 to prevent contact between these components and secure the sealing of the battery housing 20.

The battery terminal 30 may include a first portion 31 and a second portion 32. The first portion 31 may be configured to be electrically coupled to the current collector 40 inside the battery housing 20. The first portion 31 may be provided at a position corresponding to the winding center hole 10a of the electrode assembly 10. The second portion 32 may be exposed to the outside of the battery housing 20. The second portion 32 may be located approximately at the center of the closed portion of the battery housing 20.

The battery terminal 30 may include a third portion 33 provided on the outer side of the first portion 31. The third portion 33 may be riveted to the closed portion of the battery housing 20 to fix the battery terminal 30 to the battery housing 20.

The current collector (first current collector) 40 may be configured to electrically connect the battery terminal 30 and the electrode assembly 10. The current collector 40 may be electrically connected to the first electrode of the electrode assembly 10.

An insulator may be interposed between the current collector 40 and the inner surface of the closed portion of the battery housing 20 to prevent contact between the battery housing 20 and the current collector 40, which have opposite polarities.

The current collector 40 may be disposed on one side of the electrode assembly 10. Referring to FIG. 2, the current collector 40 may include a first coupling portion 41, a second coupling portion 42, and a bridge portion 43.

The first coupling portion 41 may be configured to be electrically coupled to the electrode assembly 10. The first coupling portion 41 may be coupled to the first uncoated portion 11 of the electrode assembly 10. The first coupling portion 41 may be coupled onto a coupling surface formed by bending the first uncoated portion 11. At least a portion of the first coupling portion 41 may be coupled to the first uncoated portion 11 in an area where the number of overlapping layers of the segments is maximum in the first uncoated portion 11.

The second coupling portion 42 may be electrically coupled to the first portion 31 of the battery terminal 30. The second coupling portion 42 may be welded to the first portion 31 of the battery terminal 30 by a welding tool inserted through the winding center hole 10a of the electrode assembly 10 or by a laser radiated through the winding center hole 10a.

The bridge portion 43 may be configured to electrically connect the first coupling portion 41 and the second coupling portion 42. A plurality of first coupling portions 41 may be provided along the circumferential direction of the battery cell 1. In this case, there may also be provided a plurality of bridge portions 43.

Meanwhile, the current collector 40 may be induced to break the bridge portion 43 when an overcurrent exceeding a reference value occurs in the battery cell 1. In particular, the external short-circuit test is one of the important tests in the safety evaluation items. Accordingly, when an external short circuit occurs, the current collector 40 may be induced to fuse itself, thereby minimizing ignition of the battery cell 1.

To this end, the bridge portion 43 may be formed to have a smaller cross-sectional area than the first coupling portion 41. For example, the bridge portion 43 may be formed to have at least one of a width W or a thickness h smaller than the first coupling portion 41. That is, the volume of the bridge portion 43 may be configured to be smaller than the volume of the first coupling portion 41.

In addition, the bridge portion 43 of the current collector 40 included in the battery cell 1 according to an embodiment of the present disclosure may be configured to have a cross-sectional area of 50% or less of the cross-sectional area of the bridge portion of the current collector included in the conventional battery cell.

Furthermore, according to the present disclosure, the cross-sectional area of the bridge portion 43 may be configured to be 5% or less of the entire cross-sectional area of the current collector 40. Here, the entire cross-sectional area of the current collector 40 may indicate the area inside the outermost border of the current collector 40. In addition, the cross-sectional area of the bridge portion 43 may be defined as (length d of bridge portion 43) * (width W of bridge portion 43)

In addition, the volume of the bridge portion 43 may be configured to be 5% or less of the entire volume of the current collector 40. Here, the volume of the bridge portion 43 may be defined as (length d of bridge portion 43) * (width W of bridge portion 43) * (thickness h of current collector 40). For example, the thickness h of the current collector 40 may be configured to be 0.2 mm.

According to the above-implemented configuration of the present disclosure, when the battery cell 1 is abnormal, the current collector 40 may fuse itself to be shortcircuited without ignition. In addition, when an overcurrent occurs in the battery cell 1, the current collector 40 itself may rapidly break to quickly block the overcurrent. Accordingly, safety of the battery cell 1 may be secured.

As a more specific example, the cross-sectional area of the bridge portion 43 may be configured to be 3% to 5% of the entire cross-sectional area of the current collector 40. In this case, the energy density of the battery cell 1 may be approximately 120 Wh or more.

Alternatively, the cross-sectional area of the bridge portion 43 may be configured to be 2% to 4% of the entire cross-sectional area of the current collector 40. In this case, the energy density of the battery cell 1 may be approximately 99 Wh to 120 Wh.

In addition, it is preferable that the cross-sectional area of the bridge portion 43 is 2% or more of the entire cross-sectional area of the current collector 40. This is to minimize the resistance that may increase as the cross-sectional area of the bridge portion 43 decreases.

Meanwhile, referring to FIG. 2 and FIG. 3, the current collector 40 may have a fusing portion F. The fusing portion F may be configured to break when an abnormality occurs in the battery cell 1. That is, if an overcurrent occurs in the battery cell 1, the fusing portion F may be induced to break.

The fusing portion F may be provided in the bridge portion 43. According to the above-implemented configuration of the present disclosure, the fusing portion F, which is to break when an overcurrent occurs in the battery cell 1, may be provided at the connection portion between the second coupling portion 42 and the bridge portion 43 of the current collector 40 so as to partially increase the resistance in the path of a large amount of current flowing in through the battery terminal 30 or flowing out from the battery terminal 30, thereby more effectively inducing the break of the current collector 40.

In particular, the fusing portion F may be provided at the connection portion between the bridge portion 43 and the second coupling portion 42. Furthermore, the fusing portion F may be provided in a portion closer to the second coupling portion 42 in the bridge portion 43.

According to the above-implemented configuration of the present disclosure, when an abnormal situation occurs in the battery cell 1, the portion where the second coupling portion 42 and the bridge portion 43 are connected and where the heat is most concentrated in the current collector 40 may break. As a result, the electrical connection of the battery cell 1 may be quickly cut off, thereby ensuring the safety of the battery cell 1 in use.

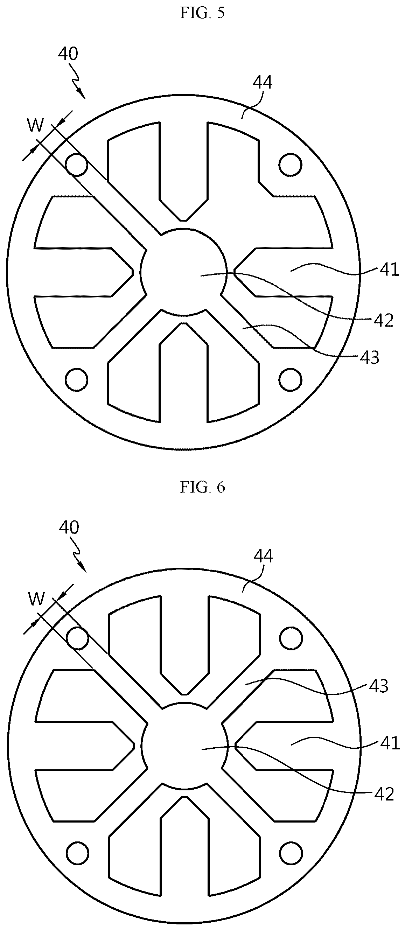

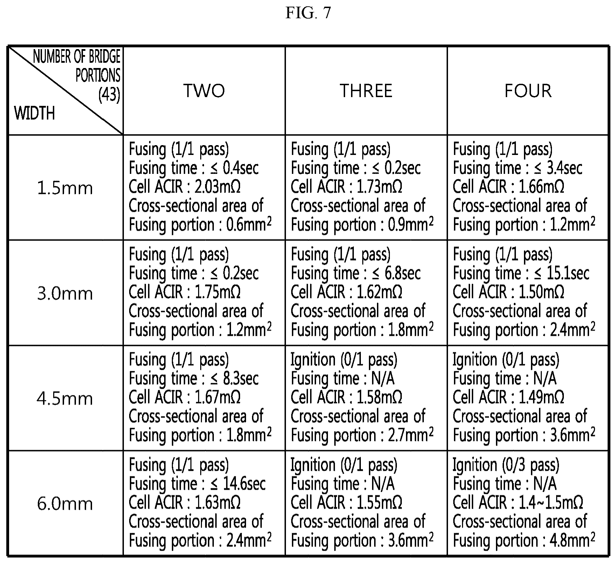

FIG. 4 is a drawing illustrating that two bridge portions are provided in a current collector (first current collector) included in a battery cell according to another embodiment of the present disclosure, FIG. 5 is a drawing illustrating that three bridge portions are provided in a current collector (first current collector) included in a battery cell according to another embodiment of the present disclosure, and FIG. 6 is a drawing illustrating that four bridge portions are provided in a current collector (first current collector) included in a battery cell according to another embodiment of the present disclosure. In addition, FIG. 7 is a drawing illustrating whether or not bridge portions fuse depending on the number and widths of bridge portions in the current collector (first current collector) in FIGS. 4 to 6.

Referring to FIGS. 4 to 6, a plurality of bridge portions 43 may be provided. The bridge portions 43 may be disposed in the circumferential direction of the electrode assembly 10. In addition, the plurality of bridge portions 43 may be configured to have the same width W. Alternatively, at least some of the plurality of bridge portions 43 may be configured to have different widths W.

The plurality of bridge portions 43 may diversify the cross-sectional areas of the bridge portions 43 by various combinations of the number and widths W of the bridge portions 43. However, the total cross-sectional area of the plurality of bridge portions 43 may be configured to be 5% or less of the entire cross-sectional area of the current collector 40.

Fusing depending on the number and widths W of the bridge portions 43 will be described with reference to FIG. 7 together with FIG. 4 to FIG. 6.

Two bridge portions 43 may be provided as shown in the embodiment in FIG. 4. In this case, referring to FIG. 7, the width W of the bridge portion 43 may be configured to be about 1.5 mm. In addition, the width W of the bridge portion 43 may be configured to be about 3.0 mm. In addition, the width W of the bridge portion 43 may be configured to be about 4.5 mm. In addition, the width W of the bridge portion 43 may be configured to be about 6.0 mm.

Three bridge portions 43 may be provided in the embodiment illustrated in FIG. 5. In this case, referring to FIG. 7, the width W of the bridge portion 43 may be configured to be about 1.5 mm. In addition, the width W of the bridge portion 43 may be configured to be about 3.0 mm.

Four bridge portions 43 may be provided in the embodiment illustrated in FIG. 6. In this case, referring to FIG. 7, the width W of the bridge portion 43 may be configured to be about 1.5 mm. In addition, the width W of the bridge portion 43 may be configured to be about 3.0 mm.

That is, referring to FIG. 7, if the total cross-sectional area of the plurality of bridge portions 43 is configured to be 5% or less of the entire cross-sectional area of the current collector 40, the current collector 40 may be induced to fuse. On the other hand, it can be seen that, if the total cross-sectional area of the plurality of bridge portions 43 exceeds 5% of the entire cross-sectional area of the current collector 40, it does not fuse well, leading to ignition.

Meanwhile, the cross-sectional area (the area indicated as A in FIG. 3) of the fusing portion F may be defined as (width W of bridge portion 43) * (thickness h of current collector 40). The fusing portion F may be provided in each bridge portion 43. In this case, referring to FIG. 7, it can be seen that, regardless of the combination of the number and widths W of the bridge portions 43, effective fusing is ensured if the sum of the cross-sectional areas of the fusing portion F is 2.4 mm² or less.

In particular, the cross-sectional area of the fusing portion F may be configured to be 1.8 mm² or less. Furthermore, the cross-sectional area of the fusing portion F may be configured to be 1.2 mm² or less. In addition, the cross-sectional area of the fusing portion F may be configured to be 0.9 mm² or less. In addition, the cross-sectional area of the fusing portion F may be configured to be 0.6 mm² or less.

Meanwhile, if an abnormality occurs in the battery cell 1, the fusing time of the current collector 40 may be within about 20 seconds. Preferably, the fusing time of the current collector 40 may be within about 15 seconds. Referring to FIG. 7, it can be seen that, if the total cross-sectional area of the plurality of bridge portions 43 is configured to be 5% or less of the entire cross-sectional area of the current collector 40, fusing is performed within about 20 seconds, thereby avoiding ignition.

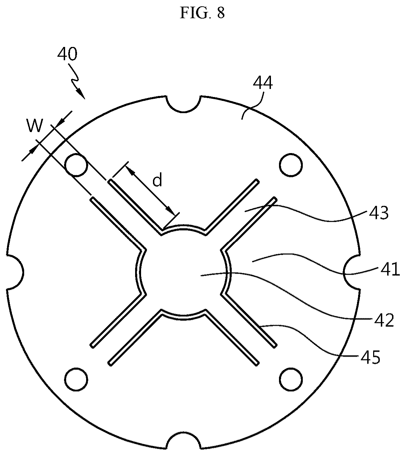

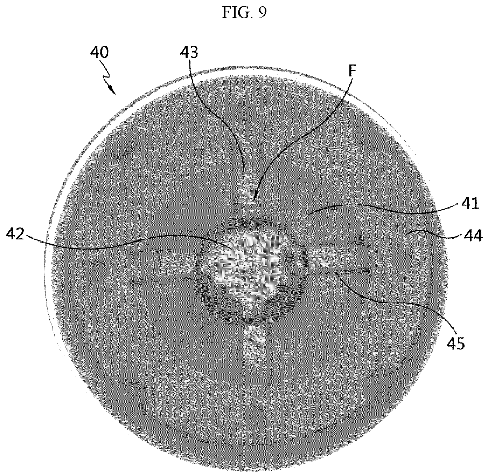

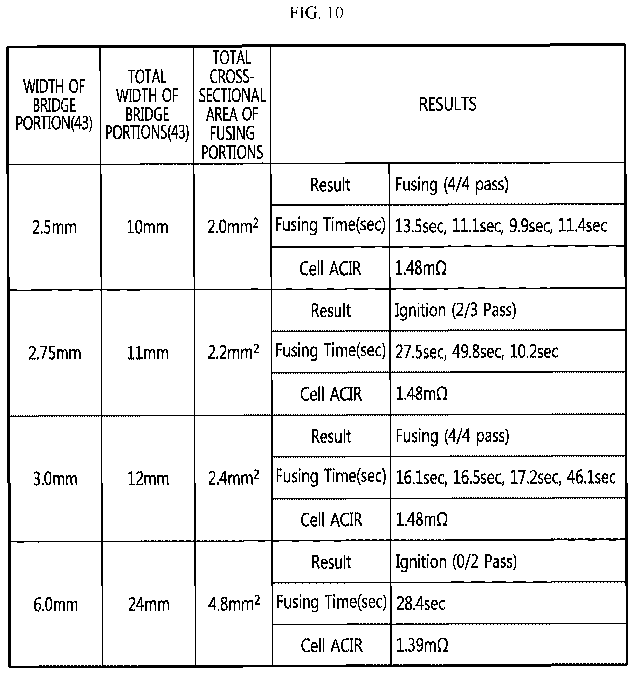

FIG. 8 is a drawing illustrating a current collector (first current collector) included in a battery cell according to another embodiment of the present disclosure, FIG. 9 is a CT image illustrating a bridge portion being fused when an overcurrent occurs in a current collector (first current collector) included in a battery cell according to another embodiment of the present disclosure. In addition, FIG. 10 is a drawing illustrating whether or not a current collector (first current collector) fuses depending on widths of the bridge portions in the current collector (first current collector) in FIG. 8.

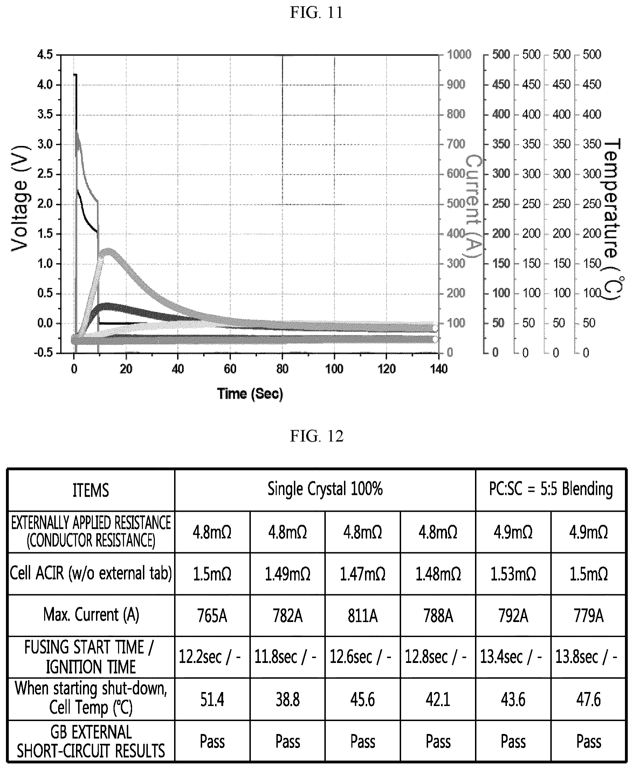

FIG. 11 is experimental data illustrating the results of an external short circuit if the width of a bridge portion in the current collector (first current collector) in FIG. 8 is 2.5 mm.

Meanwhile, referring to FIG. 2 and FIG. 8, the current collector 40 may have a rim portion 44 positioned on the outer circumstance of the first coupling portion 41 and the second coupling portion 42. In this case, the bridge portion 43 may be configured to connect the rim portion 44 and the second coupling portion 42.

As shown in the above-implemented configuration of the present disclosure, if the first coupling portion 41 and the second coupling portion 42 are indirectly connected through the rim portion 44, instead of being directly connected to each other, the impact applied to the battery cell 1 may be dispersed. That is, it is possible to minimize transfer of the impact applied to the welded portion of the first coupling portion 41 to the welded portion of the second coupling portion 42, and also minimize transfer of the impact applied to the welded portion of the second coupling portion 42 to the first coupling portion 41.

In addition, in the current collector 40, the first coupling portion 41 and the second coupling portion 42 may be positioned to be spaced apart from each other in the radial direction of the electrode assembly 10. That is, an empty space may be formed between the first coupling portion 41 and the second coupling portion 42 in the radial direction.

In particular, as in the embodiment shown in FIG. 8, the current collector 40 may have a slit line 45. The slit line 45 may be formed to perforate the current collector 40. That is, the slit line 45 may be formed to perforate the current collector 40 that has the shape of a substantially flat and circular plate. The first coupling portion 41, the second coupling portion 42, and the bridge portion 43 of the current collector 40 may be formed by the slit line 45. In this case, the first coupling portion 41 and the second coupling portion 42 may be spaced apart from each other by the slit line 45 in the radial direction. In addition, the first coupling portion 41 and the bridge portion 43 may be spaced apart from each other by the slit line 45 in the circumferential direction.

In this case, when a structure in which respective components of the current collector 40 are distinguished by the slit line 45 is applied, a complicate process for forming the respective components, i.e., the first coupling portion 41, the second coupling portion 42, and the bridge portion 43, is not required, and the current collector 40 may be manufactured more easily by simply forming a cutting line on a metal plate. As a result, the manufacturing process of the current collector 40 may be simplified, thereby improving productivity or processability when manufacturing the battery cell 1.

Likewise, in the embodiment shown in FIG. 8, the cross-sectional area of the bridge portion 43 may be configured to be 5% or less of the entire cross-sectional area of the current collector 40.

More specifically, the width W of the bridge portion 43 may be configured to be about 3.0 mm. In this case, the total cross-sectional area of the fusing portions F may be 2.4 mm² or less. As shown in the experimental results in FIG. 10, it can be seen that, if the width W of the bridge portion 43 is configured to be about 3.0 mm, effective fusing is performed within 20 seconds during an external short-circuit test of the battery cell 1.

For example, the width W of the bridge portion 43 may be configured to be about 2.75 mm. In this case, the sum of the cross-sectional areas of the fusing portions F may be 2.2 mm² or less.

Preferably, the width W of the bridge portion 43 may be configured to be about 2.5 mm. In this case, the sum of the cross-sectional areas of the fusing portions F may be 2.0 mm² or less.

As shown in the experimental results in FIGS. 10 and 11, it can be seen that, if the width W of the bridge portion 43 is configured to be about 2.5 mm, effective fusing is performed during the external short-circuit test of the battery cell 1. In this case, the fusing time of the bridge portion 43 may be about 13.5 seconds, which is within about 20 seconds.

Therefore, referring to FIGS. 10 and 11, it can be seen that, in the case where the total cross-sectional area of multiple bridge portions 43 is configured to be 5% or less of the entire cross-sectional area of the current collector 40 even in the current collector 40 equipped with the slit line 45, fusing occurs within about 20 seconds, thereby avoiding ignition.

FIG. 12 is a drawing illustrating whether or not a current collector (first current collector) included in a battery cell fuses depending on a crystal structure of a first electrode of the current collector (first current collector) according to an embodiment of the present disclosure. In addition, FIG. 13 is experimental data illustrating a result of an external short circuit when a crystal structure of a first electrode in a current collector (first current collector) is SC:PC = 5:5 according to an embodiment of the present disclosure.

As an example, the crystal structure of the first electrode may be configured as a single crystal (SC) of 100%. Referring to FIG. 12, it can be seen that, if the crystal structure of the first electrode is an SC of 100%, fusing occurs in 15 seconds or less in all cases, so that no ignition occurs.

As another example, the crystal structure of the first electrode may be configured as a mixture of a single crystal (SC) and a poly crystal (PC). For example, the crystal structure of the first electrode may be configured as single crystal (SC):poly crystal (PC) = 5:5. In this case, referring to FIG. 12, it can be seen that fusing occurs in 15 seconds or less in all cases, so that no ignition occurs.

Meanwhile, the experiments in FIGS. 12 and 13 were performed with a current collector 40 including the bridge portion 43 having a width W of 2.5 mm. That is, as in the embodiment of the present disclosure, in the case where the cross-sectional area of the bridge portion 43 is 5% or less of the entire cross-sectional area of the current collector 40, even if the crystal structure of the first electrode is configured as a mixture of the single crystal and the poly crystal, fusing may occur so that no ignition occurs, like the case where it is configured as only the single crystal.

FIG. 14 is a drawing illustrating the structure of a lower portion of a battery cell according to an embodiment of the present disclosure.

Referring to FIG. 14, the battery cell 1 according to an embodiment of the present disclosure may include a current collector (second current collector) 50. The current collector 50 may be configured to electrically connect the electrode assembly 10 and the battery housing 20. The current collector 50 may be electrically connected to the second electrode of the electrode assembly 10. The current collector 50 may be electrically coupled to a second uncoated portion 12 provided on the second surface of the electrode assembly 10. The current collector 50 may be electrically coupled onto the inner surface of the battery housing 20. The current collector 50 may be electrically coupled to a beading portion 21 formed by pressing the outer circumference of the battery housing 20.

The battery cell 1 may include a cap 60. The cap 60 may be configured to close the opening of the battery housing 20. The cap 60 may be fixed by a crimping portion 22 that is configured to extend and bend from the beading portion 21 of the battery housing 20 and surround the edge of the cap 60. A sealing member (second sealing member) G2 may be interposed between the cap 60 and the inner surface of the battery housing 20. The cap 60 may include a venting portion 61 that is configured to be weaker than the remaining area. The venting portion 61 may be configured by partially reducing the thickness of the cap 60. The venting portion 61 may be configured to rupture when the internal pressure of the battery cell 1 increases to a predetermined pressure or higher.

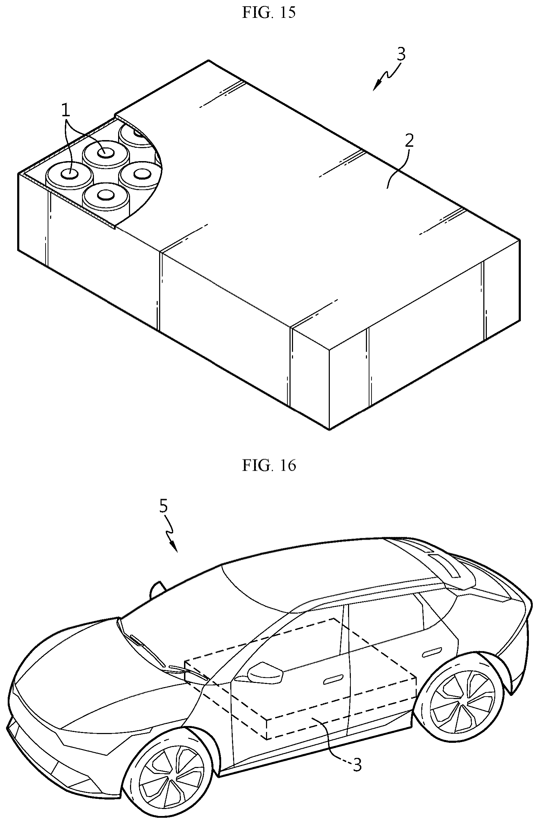

FIG. 15 is a drawing illustrating a battery pack including a battery cell according to an embodiment of the present disclosure.

Referring to FIG. 15, a battery pack 3 according to an embodiment of the present disclosure may include a battery cell 1 according to an embodiment of the present disclosure and a pack housing 2 accommodating the battery cell 1. A plurality of battery cells 1 may be provided, and the plurality of battery cells 1 may be electrically connected to each other. The battery cell 1 of the present disclosure may be configured such that the battery terminal 30 and the closed portion of the battery housing 20 function as a first electrode terminal and a second electrode terminal, respectively. Therefore, the plurality of battery cells 1 may be arranged in the pack housing 2 such that the terminals 30 of all battery cells 1 are directed upward, thereby establishing electrical connection in the upper portion of the battery cell 1.

FIG. 16 is a drawing illustrating a vehicle according to an embodiment of the present disclosure.

Referring to FIG. 16, a vehicle 5 according to an embodiment of the present disclosure may include a battery pack 3 according to an embodiment of the present disclosure. The vehicle 5 may be configured to drive by receiving power from the battery pack 3. The vehicle 5 may be, for example, an electric vehicle or a hybrid vehicle.

As described above, although the present disclosure has been described with reference to limited embodiments and drawings, the present disclosure is not limited thereto, and various modifications and variations are possible within the technical idea of the present disclosure and the scope of equivalence of the claims to be described below by those skilled in the art to which the present disclosure pertains.

## Claims

1. A battery cell comprising:
an electrode assembly;
a battery housing having an opening on one side thereof and configured to accommodate the electrode assembly through the opening;
a battery terminal configured to be electrically connected to the electrode assembly through a closed portion provided opposite the opening of the battery housing; and
a current collector comprising a first coupling portion configured to be electrically coupled to the electrode assembly, a second coupling portion configured to be electrically coupled to the battery terminal, and a bridge portion configured to electrically connect the first coupling portion and the second coupling portion,
wherein a cross-sectional area of the bridge portion is configured to be 5% or less of an entire cross-sectional area of the current collector.

2. The battery cell according to claim 1,
wherein the cross-sectional area of the bridge portion is configured to be 3% to 5% of the entire cross-sectional area of the current collector.

3. The battery cell according to claim 1,
wherein the cross-sectional area of the bridge portion is configured to be 2% to 4% of the entire cross-sectional area of the current collector.

4. The battery cell according to claim 1,
wherein the current collector comprises
a fusing portion provided in the bridge portion and configured to break when an abnormality occurs in the battery cell.

5. The battery cell according to claim 1,
wherein a plurality of bridge portions are provided, and
wherein a total cross-sectional area of the plurality of bridge portions is configured to be 5% or less of the entire cross-sectional area of the current collector.

6. The battery cell according to claim 1,
wherein a fusing time of the current collector is within about 20 seconds when an abnormality occurs in the battery cell.

7. The battery cell according to claim 1,
wherein the current collector has a rim portion located on an outer circumference of the first coupling portion and the second coupling portion, and
wherein the bridge portion is configured to connect the rim portion and the second coupling portion.

8. The battery cell according to claim 1,
wherein the first coupling portion and the second coupling portion are positioned to be spaced apart from each other in a radial direction of the electrode assembly.

9. The battery cell according to claim 8,
wherein the current collector has a slit line configured to space the first coupling portion and the second coupling portion apart from each other.

10. A battery pack comprising a battery cell according to any one of claims 1 to 9.

11. A vehicle comprising a battery cell according to any one of claims 1 to 9.
